# EUROPEAN PATENT APPLICATION

(11) **EP 1 288 269 A1**
(43) Date of publication of application: **05.03.2003**
(21) Application number: 01120500.2
(22) Date of filing: 28.08.2001
(51) Int. Cl.: C09D 11/10

(54) **Water-based screen printing ink**

(71) Applicant: SICPA HOLDING S.A., 1008 Prilly (CH)
(72) Inventor: Menoud, Aline, 1315 La Sarraz (CH); Veya, Patrick, 1110 Morges (CH)
(74) Representative: Hepp, Dieter

(57) **Abstract**

The invention relates to a water-based screen, flexo or gravure printing ink composition, to a method of manufacturing said ink composition, to the use of said ink composition for screen, flexo or gravure printing, and to value documents printed with said ink composition.

## Description

The invention relates to a water-based screen printing ink composition, to a method of manufacturing said ink composition, to the use of said ink composition for screen printing, and to value documents printed with said ink composition.

Printed security documents, such as bank notes or similar value documents must be resistant against physical and chemical environment influence (Interpol Resolution No AGN/67/RES/11 of the 67^{th} Session - Cairo, 1998; Interpol Resolution No 8 of the 5^{th} International Conference on Currency Counterfeiting - Mexico, 1969). According to the art, particular varnish formulations are used to fulfill these stringent resistance requirement in the case of Intaglio, Letterpress or Offset inks.

For the application of special pigments, such as optically variable pigments of the various types known in the art, iridescent pigments, or still other optical effect pigments, screen-printing has recently been introduced to security-document printing as the most appropriate application mode for those pigments. Screen-printing inks must be formulated which cope on one hand with the requirements of industrial screen-printing equipment, and which have, on the other hand, the required resistance values.

Industrial screen-printing is performed on either rotary screen printing or flat-bed screen printing machines. Due to the high printing speeds in these printing processes (5'000-12'000 sheets/hour or 100 - 150 m/min) the curing of the ink is a relevant step in these printing processes. Rotary screen printing processes require a different type of ink composition than flat-bed screen printing processes, mainly due to the different ways of supplying the ink to the printing process. Therefore, the ink formulation has to be adjusted or selected with respect to the different printing machine conditions.
Due to environmental, health and safety reasons, water-based screen printing ink formulations are preferred over volatile-organic-solvent containing formulations.

According to the art, a two-component (2C) water-based ink is normally used to achieve the required chemical and physical resistance. Acrylic or polyurethane resin emulsions (water-borne emulsions) or solutions are used to prepare such screen-printing inks. A crosslinking agent (in amounts up to 0.5-3%) must always be added before printing, in order to achieve the required resistance. The universal and well-known crosslinking agent (crosslinker) CX-100 from NeoResins/Avecia (former Zeneca) is generally used in water-based formulations. Addition of 1% of CX-100, prior to printing, to screen printing inks for rotary application gives excellent results (6/6, in laundry tests after 2 days only). The use of CX-100 in water-based screen inks is furthermore very common.

CX-100 is a polyaziridine and is reported to be toxic. There are evident drawbacks to the use of a crosslinker in water-based screen inks for banknote printing : it has to be added immediately before printing, and it must be added in the exactly required amounts to avoid defective prints.

Additional drawbacks of polyaziridine as a crosslinker are that it may change the ink's viscosity just after addition and that it has a limited life time of 6-8 hours in water-based systems. Repeated additions of polyaziridine to inks may cause gellation of the ink after 2-3 days.

There is an evident need for a one-component, press-ready ink system which has similar chemical and physical resistance and curing speed as the said two-component inks.

EP 597,986 describes a water-based screen printing ink formulation, comprising an acrylic emulsion and/or polyurethane dispersion as a binder system, together with pigments and optional further additives in the usual concentrations known to the skilled in the art. The described ink formulation is optimized for use in a screen-printing process wherein the printing screen is contained in a closed casing in order to maintain constant humidity within the casing during the printing process.

It is the object of the present invention to provide a one-component water-based screen printing ink which has a more convenient chemical composition, improved stability, as well as improved toxicological properties in combination with excellent chemical and physical resistance of the printed and cured ink.

These and other objects are achieved by the invention in accordance with the independent claims.

A water-based ink composition comprises a binder system selected from the group comprising acrylic and urethane-acrylic copolymer emulsions, a crosslinker, optionally a catalyst, pigments and optionally additives. The said crosslinker comprises at least two different chemical functionalities wherein a first functionality is selected to react prior to printing and wherein a second functionality is selected to effect curing of the printed ink. The first functionality provides the possibility for grafting the acrylic or urethane acrylic copolymer emulsion with a crosslinking molecule which is able to react in a second step upon a further initialization (second functionality). This further initialization can be a short raise of temperature which initiates the release of protons by the decomposition of compounds introduced for the neutralization of the emulsion and which starts the curing of the printed ink film.
The water-based ink composition is preferably used for screen printing. By an appropriate selection of the described components, which can easily be done by a person skilled in the art, the water-based ink compositions can also be used for flexo or gravure printing.

Said crosslinker is a component which is able to build up a three-dimensional network by reacting either with further components of the ink or with other crosslinker molecules.

Said catalyst is a chemical compound which lowers the activation threshold for a type of chemical reaction and which therefore promotes said chemical reaction. A catalyst will, per definition, be in the same state after the chemical reaction as it was prior to it. Due to this fact a catalyst is required only in small amounts.

"Additives" comprises those compounds and materials which are used for adjusting physical and chemical parameters of the ink composition, such as the pH value, the viscosity, the consistency, the foaming properties, the lubricating properties etc..

Chemical functionality mean a group of atoms which undergo at least one preferred specific type of chemical reaction, e.g-OH or -SH groups are able to react with acids to esters with the aid of appropriate catalysts. The various types of chemical functionalities are well known to a person skilled in the art. Through a well selected choice of conditions (e.g. temperature, solvent etc.) the skilled in the art is able to control the reaction of a chemical compound containing several chemical functionalities in such a way that only one of the chemical functionalities reacts. For reacting one of the remaining chemical functionalities a change of the reaction conditions is necessary.

Curing in the context of this invention means the drying or solidifying or reacting of the printed ink in such a manner that the ink can no longer be removed from the substrate, and further does not tack to other substrates placed on top of the printed ink. Additionally the curing passivates the printed ink against various kinds of chemical or physical agents within specified limits.

Grafting means the chemical attaching of the crosslinker molecules to the polymer molecules of the acrylic or urethane-acrylic copolymer emulsion. The so modified molecules will have approximately the same physical properties as they had before the grafting reaction.

An other advantageous embodiment of the invention is a water-based ink composition where the binder system is selected among colloidal acrylic emulsions or urethane acrylic copolymer emulsions in such a way that this emulsion is alkali soluble. Colloidal acrylic emulsions or urethane acrylic copolymer emulsions are water-borne polymers having generally low pH (pH comprised between 2.5 and 6.0).Such solubility provides a stable printing ink, eliminating a possible danger of a separation of the polymer emulsion from the remaining components of the ink.

Processing properties of the water-based ink composition is further improved by selecting an acrylic or an urethane-acrylic copolymer emulsion which has a Tg value in the temperature range of -10° to 50°C. The T_{g} value defines the temperature range within the emulsion will change from an almost solid or highly viscous state (glass-like) to a low viscous state (fluid-like). The T_{g} value has an important influence on the ability of processing the ink composition during printing.

The components of the binder system of the ink composition may be preferably selected from the group comprising acrylic and urethane-acrylic copolymer emulsions having a acid number between 10 and 90 mg KOH/g. A preferred acrylic or urethane acrylic copolymer emulsion has a acid number between 15 and 75 mg KOH/g. Grafting of crosslinker molecules on acrylic polymer or urethane-acrylic copolymers operates via the carboxylic groups. If the acid number is below 10 mg KOH/g, there is almost no grafting of crosslinker molecules and if the acid number is above 90 mg KOH/g, the acrylic polymer or urethane-acrylic copolymer is too sensitive to alkali or detergents solutions and leads to a poor resistant water-based ink.

Stability of the ink can be further improved by selecting an acrylic or an urethane acrylic copolymer emulsion from the group of emulsions which have self-crosslinking properties, such as provided by reactive methylene groups. Self-crosslinking properties of acrylic or urethane-acrylic copolymer emulsions are well-known for the skilled in the art. The role of acetoacetate groups is largely used to modify the polymer backbone (See International Polymer Science and Technology, vol. 26, No 4, 1999, T79-T87 for a patents overview). Siloxane functionalities may be incorporated *in situ* in the acrylic or urethane-acrylic copolymer backbone through the free radical or cationic initiated aqueous emulsion polymerization process (see EP 0 350240 B1 by Rohm&Haas). Both acetoacetate or siloxane functionalities work with pH modifications through amines evaporation. Self-crosslinking properties noteworthy allow the formation of a more intensely interconnected polymer network, which results in enhanced resistance of the printed ink.

Another aspect of the invention concerns the solid content of the acrylic or urethane-acrylic copolymer emulsion. A solid content comprised in between 35 to 55 % by weight of the emulsion allows to achieve the best results (acrylic emulsions or urethane-acrylic copolymer emulsions have generally a solid content comprised between 35 and 55%, and this is the solid content of the water-borne polymers. This provides higher stability towards temperature changes, formulations, solvents addition, pH changes, etc.).

A preferred water-based ink composition of the present invention comprises a weight amount of 30 to 70% of self-crosslinking acrylic or urethane-acrylic copolymer emulsion , referred to the total weight of the composition. The selected weight amount of emulsion provides a sufficient quantity of binder material to achieve the necessary resistance towards chemical agents and physical treatments. The selected amount of emulsion provides a sufficient pigment wetting and improve water-based ink transfer from the printing plates to the substrate (from the flexo plate to the paper or from the gravure cylinder to the paper). In a preferred ink composition the weight amount of acrylic or urethane-acrylic copolymer emulsion ranges between 35 and 60% and in a more preferred composition between 40 and 55 % of weight of the total composition.

An important aspect of the present invention concerns the crosslinker, which is selected from the group of substituted alkoxy silanes (R₁)_{y}(R₂O)_{z}Si. R₁ and R₂ are different organic substituents and the subscripts y and z have to fulfill the equation y + z = 4. A preferred crosslinker is selected from the group of monosubstituted trialkoxy silanes (with y = 1 and z = 3). These substituents R₁ and R₂ contain functional groups which are different from each other. This difference allows to control the process of interconnecting / reacting of the various components within the prepared ink formulation and/or the substrate at different stages of the application of the ink. A preferred crosslinker is selected from the group of monosubstituted triethoxysilanes. Said crosslinker contains furthermore an epoxy functional group (first functional group) and more preferably the crosslinker is chosen from the group comprising epoxy-cycloaliphatic triethoxysilanes and glycidyl-triethoxysilanes. The epoxy functionality as the first functionality is to react with functional groups of the binder system, in particular with free carboxylic groups. Anhydrides may react with epoxide as well provided a catalyst is used.

Said epoxy groups will react after an induction period with the functional groups of the acrylic or urethane-acrylic copolymer emulsion. The second functionality (consisting of the ethoxy-entities) of the crosslinker is to react upon curing of the printed ink. The reaction is initiated by a change of the pH value in the ink film (hydrolysis). The pH change is brought about by the decomposition of chemical compounds which are part of the ink components and necessary for neutralizing the functional groups of the binder components. During said decomposition, evaporation of ammonia or volatile amines related to the neutralizing agent occurs.

Another aspect of the invention is that said water-based ink composition comprises said crosslinker in amounts between of 0.25 to 3% by weight of the total composition. Outside these limits either the amount of crosslinker is not able to create a sufficiently interconnected polymer network, or an overdosage of crosslinker will result in too short polymer chains, highly crosslinked, which counteracts the mechanical and chemical resistance of the polymer, and thus of the printed ink. A preferred composition comprises the crosslinker between 0.5 and 2% and more preferably between 1 and 2% by total weight of the ink composition.

In a further aspect of the invention, a catalyst is included in the ink composition. The catalyst is selected from the group of imidazoles, and a preferred compound of this group is 2-ethyl-4-methylimidazole. Since the catalyst accelerates the reaction of the functional groups of the binder components with said siloxane compounds, the necessary amount of crosslinker can be reduced in the presence of a catalyst.

The catalyst is comprised within the ink composition in amounts between 0.05 and 0.6% by weight of the total ink composition. The amount of the catalyst is preferably selected in the range of 0.1 to 0.4% and more preferably in the range of 0.2 to 0.4% by weight of the total ink formulation.

It has been found that stability and shelf life of the ink can be improved by adjustment of the water-based ink composition to a pH value between 7.0 and 8.5. A preferred ink composition has a pH value between 7.5 and 8.3 and an even more preferred ink composition has a pH value between 7.5 and 8.0. The correct pH value is important for the stability of the alkoxy entities of the crosslinker in the presence of water, since these chemical functionalities are known not to be stable towards hydrolysis at elevated pH values. A too high pH value will thus reduce the shelf life of the water-based ink composition.

In still another aspect, the invention concerns the selection of a suitable amount of pigments comprised in the ink composition. The pigment content , referred to the total weight of the ink composition, is in the range of 10 to 25% by weight, preferable in the range of 12 to 20% and even more preferable in the range of 15 to 18% by weight.

In a particular embodiment of the water-based ink composition, the pigment is selected from the group of security pigments, having particular physical properties such as selective spectral absorption, luminescence, magnetism, electromagnetic resonance, optical effects and the like. Particularly interesting in the context of the present invention are pigments consisting of pigment flakes having first and second parallel planar surfaces. The said pigment flakes preferably have an aspect ratio of larger than two and more preferably larger than five. Aspect ratio in the context of the present invention means the flake's diameter-to-height ratio.

A further part of the present invention is a method of manufacturing said water-based ink composition. The method comprises of at least four steps:
- In a first step, an acrylic or an urethane-acrylic copolymer emulsion is provided.
- In the following, optional, second step a catalyst, pigments and further optional additives are added to said polymer emulsion.
- In the following, third step, a crosslinker capable of reacting with the acrylic or the urethane-acrylic copolymer emulsion is added.
- The following, fourth step comprises the intimate mixing of the acrylic or urethane-acrylic copolymer emulsion, the optional catalyst, the optional pigments and further optional additives, with the crosslinker added in step three, and allowing the acrylic or urethane acrylic copolymer emulsion and the crosslinker to chemically react, forming covalent links between the crosslinker molecules and the acrylic or urethaneacrylic copolymer molecules of the emulsion.

This method provides a water-based ink composition useful for screen-printing and exhibiting good shelf stability, whilst having the properties (e.g. viscosity) required for screen printing applications.

Manufacturing the ink according to the proposed method (proposed order) assures excellent printing properties and resistance of the printed and cured ink.

Still a further aspect of the present invention concerns the use of a water-based ink composition for screen, flexo or gravure printing. The said ink composition comprises acrylic or urethane acrylic copolymer emulsions and a crosslinker wherein the said crosslinker has reacted with said acrylic or urethane acrylic copolymer components of the emulsion prior to printing. The ink composition has to be conditioned for printing in such a way that the grafting reaction of the crosslinker to the molecules of the acrylic or urethane-acrylic copolymer emulsion has been completed. This grafting reaction usually takes place within 2 to 4 days.

In this way, it can be made sure that the hydrolysis of the second functionality of the crosslinker (corresponding to the curing of the printed ink) will involve the grafted emulsion molecules and achieve the proposed excellent resistance of the ink against chemical and physical agents.

Another aspect of the invention concerns a value document carrying indicia which have been produced by printing a water-based screen, flexo or gravure printing ink composition according to the invention. The printed and cured ink fulfills specified resistance requirements against chemical and physical agents.

In the following the invention is explained further by nonlimiting composition examples which are disclosed for illustration purposes.

List of abbreviations:
- Imicure EMI-24 Air Products, 2-Ethyl-4-methylimidazole
- AMP-95 Angus Chemie GmbH 2-Amino-2-methyl-1-propanol, 95% solution
- Neocryl XK-11 NeoResins /Avecia
- Neocryl XK-14 NeoResins /Avecia
- Neocryl BT-9 NeoResins /Avecia
- Neocryl BT-20 NeoResins /Avecia
- Armorez CR2900 Westvaco
- CoatOSil®1770 Witco Co. beta-(3,4-Epoxycyclohexyl) ethyltriethoxysilane
- CoatOSil® Y-11988 Witco Co 40% emulsion of CoatOSil® 1770 in water
- CX-100 NeoResins polyaziridine compound
- Zonyl UR Dupont Fluorosurfactant

Water-based screen inks were prepared using the following color-shifting, optical variable pigments and fluorescent/phosphorescent pigments:
- Iridescent inks : Iriodin (Merck), Paliosecure, Paliogene, Paliotol, Paliochrome (BASF), Mearlin Dynacolor, ICP and Mearl (Engelhard), Flonac (Eckart).
- Color shifting inks (liquid-crystal based) : LCP, SLM, Helicone HC (Wacker).
- Color shifting inks (non liquid-crystal based): Variochrom (BASF), Colorcrypt (Merck), Chromaflair (Flex). Optical variable inks (OVI™) : OVP™ (Flex).

The test for the chemical and physical properties have been performed according to following standard procedures:

The acrylic or polyurethane emulsions were always applied with an automatic hand-coater on non-fluorescent banknote paper. The intrinsic fluorescence was checked under UV illumination at 254 and 366 nm.
Water-based screen inks with color-shifting or optical variable pigment were applied on security banknote paper using an automatic hand-coater (hand-coater bar no 3, wet film thickness of 24 µm). The applied ink was dried for 30 seconds at 80°C and the adhesion was checked with a finger nail.

Chemical and physical resistance towards solvents, acid and alkali bleeding at RT or elevated temperature, wet crumpling (=WC) and dry crumpling (=DC), wet rub (=WR) and dry rub (=DR), were determined, and laundry tests were performed (according to the specifications established by INTERPOL at the 5^{th} International Conference on Currency and Counterfeiting in 1969, or to the Bureau of Engraving and Printing's test methods as stated in BEP-88-214 (TN) section M5). Resistance to laundry, wet rub and alkali bleeding are normally the most difficult to achieve. Two laundry tests and one wet rub test have been generally applied to water-based screen inks to select the best emulsions. The tests are normally performed after 7, 15 and/or 30 days to observe long-term cross-linking effects.

The wet and dry crumpling tests were performed on a IGT instrument. A print by approx. 5x5 cm is rolled and introduced in a tube. The roll of paper is crunched in the tube using a piece of metal which has the same diameter. The piece of paper is flattened and rolled again in an other direction (by 90°). After 4x, the print is turned on the other side. The operation is repeated 4x (wet) or 8x (dry). The wet test is done in the same conditions using a print which has been damped in water for 10 minutes.
Rub tests were pursued with a Prüfbau instrument. Conditions :
dry rub tests, 100 x with a 610 g weight and wet rub tests after having damped samples for 10 minutes in water.

The first laundry test, called "laundry solution with stirring", is performed using a 1L reactor, comprising a mechanical stirrer, a heating mantle, containing 500mL of water, 2.5g of industrial laundry powder (Persil, Henkel or equivalent) and 5 g Na₂CO₃. Three printed samples (squares with 5x5 cm on edge) are placed in the reactor, stirred and heated for 30 minutes. Samples are washed off using distillated water and dried for 2 hours at 40°C. The result is estimated on a average of three samples. The slow mechanical stirring and high temperature of this test is the illustration of a specific chemical test.

The second laundry test, called "washing machine test", is performed using a standard washing machine (Lavamat W 1020, AEG) with 2 kilogramms of cotton fabrics and 100 mL of laundry powder (Persil, Henkel). Printed samples (squares with 5x5cm on edge) are placed in individual cotton pockets. The laundry test is pursued at 95°C for 40 minutes. The result is estimated on a average of three samples. The good mixing in individual pockets and the high temperature is the illustration of a specific physical test.

The ink alteration is visually estimated according to the following scale :

| **Note** | **Visual ink alteration** |
|---|---|
| 6 | No alteration |
| 5 | 0-20% |
| 4 | 20-33% |
| 3 | 33-50% |
| 2 | 50-66% |
| 1 | 66-80% |
| 0 | 80-100% |

### (a) Water-based ink compositions for rotary screen presses:

### Example 1:

The ink samples have been prepared according to following composition :
A dry resin content of 18-20% has been chosen for all formulations and acrylic/polyurethane emulsions concentrations have been chosen according to the solid content (column 3). The pigment (Iriodin fine Gold) concentration is comprised between 16.5-18%, further 3% of wax (Jonwax 22, S.C. Johnson Polymer), 6% of coalescing solvents or co-solvents (ethylenediglycol, dipropyleneglycol methylether, Texanol)and 2% of additives (Byk 24, BYK- Chemie) are added. The final viscosity of the composition is adjusted with thickeners (Rheolat 278, Rheox) in order to obtain a viscosity of 800-1000 mPa.s and water is added to complete the formulation to 100%.

| **Product** | **Supplier** | **solids / [%]** | **Acid value / mgKOH/g** | **Tg / [°C]** | **MFT / [°C]** | **pH** |
|---|---|---|---|---|---|---|
| Neocryl XK-11 | NeoResins (Avecia) | 43 | 19 | 25 | 33 | 8.1 |
| Neocryl XK-14 | | 37.5 | 5 | 50 | 33 | 8.6 |
| Armorez CR 2900 | Westvaco | 41 | | 18 | 15 | 5.0 |

The samples are prepared according the above mentioned composition, whereas sample 1 contains Neocryl XK-11, sample 2 Neocryl XK-14 and sample 3 Armorez CR2900 as acrylic /polyurethane emulsion, respectively.

Iridescent inks have been prepared, applied on banknote paper and tested.

| Results of laundry solution and stirring: | | | | | |
|---|---|---|---|---|---|
| S. | Product | LSS* resistances / 5 days | Dry crumpling / 5 days | Wet crumpling / 5 days | LSS* resistances / 30 days |
| 1 | Neocryl XK-11 | 5.5-5.9 | 6 | 6 | 5.1-5.9 |
| 2 | Neocryl XK-14 | 5.15 | 6 | 6 | 4.9 |
| 3 | Armorez CR 2900 | 5 | 6 | 6 | 5.33 |

| | | | | | |
|---|---|---|---|---|---|
| *LSS: laundry solution + stirring | | | | | |

### Sample 4:

The composition of ink sample 1 was modified in such a way that 0.5% of CX-100 was added prior to printing (sample 4 will serve as a reference).

### Sample 5:

The composition of ink sample 1 was modified in such a way that 2% of CoatOSil® Y-11988 was added and the pH value of the ink was adjusted between 8.0 and 8.3 using AMP-95 if necessary.

The ink was stored at ambient temperature for 3 days before printing, in order to let the crosslinker react with the emulsion. The ink was printed, dried and tested after seven and after 30 days.

| Test results of sample | 1 | 4 | 5 |
|---|---|---|---|
| Laundry tests at 7 days | | S. 1 + 0.5% CX-100 | S. 1 + 2% Y-11988 |
| LSS* | 1.5 | 5.5 | 5.6-5.85 |
| LWM* | 3.7 | 5.3 | 4.7-5.5 |
| Laundry tests at 30 days | | S. 1 + 0.5% CX-100 | S. 1 + 2% Y-11988 |
| LWM* | 5 | 5.4 | 5.4-5.6 |

| | | | |
|---|---|---|---|
| * LWM: laundry with washing machine; LSS: laundry solution + stirring | | | |

Tests revealed an excellent stability of the ink formulations as it can be seen from the results of the viscosity measurements (Viscosimeter Model DV-I+ by Brookfield ) at 25°C and 40°C of samples 1 and 5 :

| Viscosity of the ink composition as a function of shelf time: | | | | |
|---|---|---|---|---|
| days | S. 1 : 25°C | S. 1 : 40°C | S. 5 : 25°C | S. 5 : 40°C |
| 0 | 795 | | 830 | |
| 3 | 890 | 920 | 735 | 735 |
| 6 | 880 | | 690 | |
| 9 | 855 | 920 | 650 | 765 |
| 16 | 845 | 945 | 638 | 728 |
| 23 | 840 | 963 | 648 | 713 |
| 30 | 863 | 1105 | 660 | 705 |
| 66 | 818 | 1722 | 653 | 655 |
| 92 | 808 | | 640 | 728 |

### Example 2:

Influence of the used amount of crosslinker on laundry solution and laundry machine resistance, respectively.

### Samples 6, 7 and 8 :

The ink composition according to sample 5 was used but in place of CoatOSil® Y11988 the more stable CoatOSil® 1770 was added. Sample 6 contains 0.15 % of CoatOSil® 1770, sample 7 0.25% CoatOSil® 1770 and sample 8 0.5% CoatOSil® 1770. The amounts of crosslinker refer each to a value of 20% dry weight of resin.

| Results of ink composition with varying amounts of crosslinker | | | | | | |
|---|---|---|---|---|---|---|
| | Sample 6 | | Sample 7 | | Sample 8 | |
| | 0.15% | | 0.25% | | 0.50% | |
| months | LWM* | LSS* | LWM* | LSS* | LWM* | LSS* |
| 0 | 4.6 | 2.15 | 4.85 | 2.9 | 3.0 | 4.85 |
| 1 | 4.6 | 4.5 | 4.25 | 5.15 | 4.75 | 5.85 |
| 2 | 5.65 | 4.65 | 5.6 | 2.35 | 5.0 | 4.5 |
| 3 | 4.6 | 4.0 | 4.35 | 3.85 | 2.6 | 4.9 |

| | | | | | | |
|---|---|---|---|---|---|---|
| * LWM: laundry with washing machine; LSS: laundry solution + stirring | | | | | | |

### Example 3:

Influence of a catalyst on the laundry solution and laundry machine resistance, respectively.

### Samples 9, 10 and 11 :

To the ink compositions of samples 6, 7 and 8 the catalyst EMI-24 was added in a weight ratio of 0.2 with respect to the amount of crosslinker .

| Results of ink composition with varying amounts of catalyst. | | | | | | |
|---|---|---|---|---|---|---|
| | Sample 9 | | Sample 10 | | Sample 11 | |
| catalyst | 0.03% | | 0.05% | | 0.10% | |
| months | LWM* | LSS* | LWM* | LSS* | LWM* | LSS* |
| 0 | 4.33 | 5.58 | 4.5 | 5.58 | 4.83 | 5.58 |
| 1 | 4.92 | 4.25 | 4.75 | 4.5 | 4.08 | 5.5 |
| 2 | 5.75 | 4.83 | 5.67 | 4.83 | 5.16 | 5.67 |
| 3 | 4.58 | 4.5 | 4.33 | 5.0 | 0.83 | 5.75 |

| | | | | | | |
|---|---|---|---|---|---|---|
| * LWM: laundry with washing machine; LSS: laundry solution + stirring | | | | | | |

### Example 4:

One component water-based ink compositions with optically variable pigments or optical effect pigments.

Optically variable pigments or optical effect pigments can be manufactured in different ways and are known to the skilled in the art. Depending upon their chemical nature, optically variable pigments may exhibit varying stability against the conditions within the ink formulation. They may have to be passivated in certain cases, using suitable methods and chemicals.

Sample 12 and 14 comprise passivated optical variable pigments. Sample 13 and 15 contain the same optical variable pigments but in a non passivated state. The ink samples were prepared according to the following procedure:

### Sample 12:

| 1. Pigment passivation *in situ* in water : | |
|---|---|
| Propylenglycolmethylether | 6.0 |
| Zonyl UR | 0.5 |
| Water | 22.0 |
| OVP green/blue | 15.0 |
| AMP-95 | 0.25 |

To a solution of Zonyl UR in propylenglycolmethylether at 50°C water was added. Further, OVP was added at room temperature when mixing and pH was maintained between 7.5-8.0 with AMP-95. The OVP pigment was dispersed slowly (500 RPM) using a lab mixer for 30 minutes.

| 2. Preparation of the ink : | |
|---|---|
| Neocryl XK-11 | 48.0 |
| Jonwax 22 | 3.0 |
| Byk 024(BYK-Chemie) | 1.9 |
| Byk 025(BYK-Chemie) | 0.1 |
| Aerosil 200(Degussa) | 1.0 |
| CoatOSil 1770 | 1.0 |
| Silwet L-7608(Witco) | 0.1 |

All components were introduced directly into the OVP dispersion and stirred for 5 minutes at 1000-1500 RPM. The pH-value was measured and adjusted to 7.5-8.0, if necessary, with AMP-95. CoatOSil® 1770 and Silwet L-7608 were added as a blend to the ink under good mixing at 1500 RPM for 15 minutes.

| 3. Viscosity adjustment : | |
|---|---|
| Water | 1.7 |
| Rheolat 278 | 0.55 |

The thickener (Rheolat 278) was added carefully in order to obtain a viscosity between 250±50 mPa.s. If necessary, AMP-95 was added to maintain the pH between 7.5-8.0.

The same ink was made without the passivation agent Zonyl UR (Sample 13). An ink containing a Chromaflair™ pigment (magenta to gold), with and without Zonyl UR, was also prepared in the same way (Examples 14 and 15).

| Results of ink compositions with passivated and non-passivated optical variable pigments. | | | | | | | | |
|---|---|---|---|---|---|---|---|---|
| | Sample 12 | | Sample 13 | | Sample 14 | | Sample 15 | |
| months | LWM* | LSS* | LWM* | LSS* | LWM* | LSS* | LWM* | LSS* |
| 0 | 5,5 | 5,75 | 4,5 | 5,25 | 5,35 | 5,25 | 4,3 | 5,25 |
| 1 | 2,3 | 5,7 | 3,7 | 5,5 | 5,2 | 5,6 | 4,3 | 5,3 |
| 2 | 1 | 5,5 | 2,3 | 5,7 | 4,75 | 5 | 4,1 | 5,5 |

| | | | | | | | | |
|---|---|---|---|---|---|---|---|---|
| * LWM: laundry with washing machine; LSS: laundry solution + stirring | | | | | | | | |

### (b) Water-based ink compositions for flat bed screen presses :

### Example 5:

| General procedure for the preparation of the inks: | |
|---|---|
| Deionised water | x |
| Co-solvents | 6.0 |
| AMP-95 | y |
| Acrylic emulsion (dry solid : 19%) | 42-57 |
| Byk 024 | 2.0 |
| Jonwax 22 | 3.0 |
| Iriodin fine Gold | 18.0 |
| Thickener | z |
| Total | 97.00 |

AMP-95 and acrylic emulsions (alkali soluble) were added at the same time to water and co-solvents during mixing. The amount of water and ammonia was calculated according to the acid value and to the solid content of each emulsion. Ink pH value was adjusted to 7.5-7.7 with AMP-95. Ink viscosity was adjusted between 800 and 1000 mPa.s using the thickener Rheolat 278.

| Physical properties of used acrylic emulsions: | | | |
|---|---|---|---|
| Emulsions | solids / [%] | Tg / [°C] | Acid value [mgKOH/g] |
| Neocryl BT-9 | 40 | 1 | 72 |
| Neocryl BT-20 | 40 | 29 | 60 |

Sample 16 contains Neocryl BT-9 emulsion, sample 17 Neocryl BT-20, respectively.

To each of the ink formulations 2 % of CoatOSil® 1770 (amount referred to the total weight of the composition) was added and after a minimum storage period of 3 days at ambient temperature the ink was applied on security banknote paper using an automatic hand-coater (hand-coater bar no 3, wet film thickness of 24 µm). The applied ink was dried for 60 seconds at 80°C and the adhesion was checked with a finger nail.

| Results for ink compositions with crosslinker. | | | |
|---|---|---|---|
| | Tg / [°C] | Laundry machine / 7 days | Laundry machine / 30 days |
| Sample 16 | 9 | 5.65 | 5.65 |
| Sample 17 | 29 | 3.8 | 5.6 |

### Example 6:

### Influence of the used amount of crosslinker.

An ink formulation according Example 5 was prepared with Neocryl BT-20 as acrylic emulsion. To this ink CoatOSil® 1770 was added in amounts of 1% (sample 18) and 2% (sample 19) with respect to the dry solid weight of the resin.
The inks were left for three days at room temperature and then applied (printed) onto banknote paper. The printed samples were tested after 7, 15, 30 and 60 days with both, the laundry washing machine and the laundry solution tests.

| Results of varying amounts of crosslinker | | | | |
|---|---|---|---|---|
| | Sample 18 | | Sample 19 | |
| Days | LWM* | LSS* | LWM* | LSS* |
| 7 | 0,30 | 0,00 | 3,20 | 0,20 |
| 15 | 1,32 | 1,02 | 5,42 | 5,17 |
| 30 | 1,80 | 0,37 | 5,42 | 5,67 |
| 60 | 5,58 | 2,75 | 5,83 | 5,67 |

| | | | | |
|---|---|---|---|---|
| * LWM: laundry with washing machine; LSS: laundry solution + stirring | | | | |

## Claims

1. Water-based screen printing ink composition having
(a) an acrylic or urethane-acrylic copolymer emulsion;
(b) a crosslinker;
(c) optionally a catalyst;
(d) optionally pigments; and
(e) optionally additives,
**characterized in that** said crosslinker comprises at least two different chemical functionalities within the same molecule, wherein a first of said functionalities is chosen such as to form a covalent link with said polymer prior to printing and a second of said functionalities is selected to effect crosslinking of said polymer to cure the printed ink.

2. Water-based screen printing ink composition according to claim 1 wherein the acrylic or urethane-acrylic copolymer emulsion is alkali soluble.

3. Water-based screen printing ink composition according to one of the claims 1 or 2 **characterized in that** the acrylic or urethane-acrylic copolymer has a Tg value in the temperature range between -10° and 50°C.

4. Water-based screen printing ink composition according to one of the claims 1 to 3 wherein the acrylic or urethane-acrylic copolymer emulsion has a acid number between 10 and 90 mg KOH/g, preferably between 15 and 75 mg KOH/g.

5. Water-based screen printing ink composition according to one of the claims 1 to 4 **characterized in that** the acrylic or urethane-acrylic copolymer emulsion is selected from the group having self-crosslinking properties.

6. Water-based screen printing ink composition according to one of the claims 1 to 5 **characterized in that** the acrylic or urethane-acrylic copolymer emulsion has a solid content of 35 to 55 % by weight of the emulsion.

7. Water-based screen printing ink composition according to one of the claims 1 to 6 **characterized in that** the said crosslinker is chosen from the group of substituted alkoxy silanes (R₁)_{y}(R₂O)_{z}Si (wherein R₁, R₂ are different substituents, y + z = 4), preferably from the group of monosubstituted trialkoxy silanes (y = 1, z = 3).

8. Water-based screen printing ink composition according to one of the claims 1 to 7 **characterized in that** the said crosslinker is chosen from the group of monosubstituted triethoxysilanes, preferably from the group comprising epoxy-cycloaliphatic triethoxysilanes and glycidyl-triethoxysilanes.

9. Water-based screen printing ink composition according to one of the claims 1 to 8 wherein the catalyst is chosen from the group of imidazoles.

10. Water-based screen printing ink composition according to one of the claims 1 to 9 comprising between 30 and 70%, preferably between 35 and 60% and more preferably between 40 and 55% w of self-crosslinking acrylic or urethane acrylic copolymer emulsion with respect to the total weight of the composition.

11. Water-based screen printing ink composition according to one of the claims 1 to 10 comprising between 0.25 and 3%, preferably between 0.5 and 2%, and even more preferably between 1 and 2% w of said crosslinker, with respect to the total weight of the composition.

12. Water-based screen printing ink composition according to one of the claims 1 to 11 comprising between 0.05 and 0.6%, preferably 0.1 and 0.4% and even more preferably between 0.2 and 0.4% w of catalyst with respect to the total weight of the composition.

13. Water-based screen printing ink composition according to one of the claims 1 to 12 **characterized in that** the composition has a pH value between 7.0 and 8.5, preferably between 7.5 and 8.3 and even more preferably between 7.5 and 8.0.

14. Water-based screen printing ink composition according to one of the claims 1 to 13 **characterized in that** the pigments content is comprised between 10 to 25%, preferably between 12 and 20% and even more preferably between 15 and 18% of the total weight of the composition.

15. Water-based screen printing ink composition according to one of the claims 1 to 14 **characterized in that** the pigment is selected from the group consisting of luminescent pigments, magnetic pigments, optical effect pigments and optically variable pigments, in particular flake pigment having first and second parallel planar surfaces and a aspect ratio of larger than two, preferably larger than five.

16. Method of manufacturing a water-based screen printing ink composition according to one of the claims 1 to 15 comprising the steps of
(a) providing an acrylic or urethane-acrylic copolymer emulsion;
(b) optionally providing a catalyst, optional pigments and optional additives;
(c) providing a crosslinker which is capable of forming a covalent link under first conditions with the polymer provided in (a), and crosslinking the resulting polymer under second conditions;
(d) intimately mixing the components provided in (a), (b) and (c) and allowing the polymer provided in (a) to react with the crosslinker provided in (c)under said first conditions.

17. Use of a water-based ink composition comprising acrylic or urethane-acrylic copolymer emulsions and a crosslinker, wherein said crosslinker is covalently linked with said acrylic or urethane-acrylic copolymer, as a screen, flexo or gravure printing ink.

18. Value document carrying indicia printed by using a water-based screen, flexo or gravure printing ink composition according to claims 1 to 15.
